(19) Europäisches Patentamt
European Patent Office
Office européen des brevets

(11) **EP 4 289 715 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **23177070.2**

(22) Anmeldetag: **02.06.2023**

(51) Internationale Patentklassifikation (IPC):
**B62M 6/45** (2010.01)    **B62J 45/413** (2020.01)
**B62M 6/50** (2010.01)    **B62M 6/55** (2010.01)

(52) Gemeinsame Patentklassifikation (CPC):
**B62M 6/45; B62J 45/413; B62M 6/50; B62M 6/55**

(54) **VERFAHREN ZUM REGELN EINER SCHIEBEUNTERSTÜTZUNG EINES FAHRZEUGS**

METHOD FOR CONTROLLING A SLIDING SUPPORT OF A VEHICLE

PROCÉDÉ DE RÉGULATION D'UNE ASSISTANCE COULISSANTE D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.06.2022 DE 102022205843**

(43) Veröffentlichungstag der Anmeldung:
**13.12.2023 Patentblatt 2023/50**

(73) Patentinhaber: **Robert Bosch GmbH**
**70442 Stuttgart (DE)**

(72) Erfinder:
• **Weinmann, Matthias**
**72336 Balingen (DE)**
• **Reck, Joseph**
**70794 Filderstadt (DE)**

(56) Entgegenhaltungen:
**EP-A1- 3 915 863**    **DE-B3- 102019 115 312**

**Beschreibung**

Die Erfindung betrifft ein Verfahren zum Regeln einer Schiebeunterstützung eines Fahrzeugs, insbesondere eines einspurigen Fahrzeugs wie ein eBike.

Die Erfindung betrifft weiter ein Fahrzeug, insbesondere ein einspuriges Fahrzeug wie ein eBike, mit einer Antriebseinheit, einer Geschwindigkeitsmesseinrichtung und einer Schiebeunterstützung.

Obwohl die vorliegende Erfindung allgemein auf beliebige Fahrzeuge anwendbar ist, wird die vorliegende Erfindung in Bezug auf einspurige Fahrzeuge in Form von eBikes beschrieben.

Stand der Technik

Einspurige Fahrzeuge wie eBikes können eine Schiebeunterstützung durch einen Antrieb aufweisen, mit der ein eBike einfacher durch einen Nutzer geschoben werden kann. Dabei wird die Schiebeunterstützung nur bis zu einer vorgebbaren Geschwindigkeit aktiviert.

Am Beginn des Schiebevorgangs des eBikes durch einen Nutzer ist die Geschwindigkeit des eBikes aus dem folgenden Grund zunächst unbekannt. Die Geschwindigkeit wird häufig über einen Reed-Sensor am Hinterrad gemessen. Über den Abstand der Zeitpunkte von Signalen des Reed-Sensors kann auf die Geschwindigkeit geschlossen werden. Hierfür können folglich je nach Anfangsposition des Hinterrades bis zu zwei vollständige Umdrehungen des Rades erforderlich sein.

Auf Grund unterschiedlicher Gangstufen/Übersetzungen eines Getriebes eines Antriebs des eBikes kann von einer Umdrehungsfrequenz des Antriebs nicht eindeutig auf die Geschwindigkeit des Fahrrads geschlossen werden. Um zu verhindern, dass die Schiebeunterstützung über die vorgebbare Geschwindigkeit hinaus aktiviert wird, wird vermutetet, dass das Fahrrad sich im höchsten Gang befindet. Somit wird zwar verhindert, dass das Fahrrad über die vorgegebene Geschwindigkeit hinweg beschleunigt wird, es wird jedoch gegebenenfalls eine zu geringe Schiebeunterstützung bereitgestellt. Je nach eingelegtem Gang kann die Geschwindigkeit des eBikes somit deutlich unter der Wunsch-Geschwindigkeit liegen.

Ferner wird auf die Druckschriften EP 3 915 863 A1 und DE 10 2019 115312 B3 verwiesen.

Offenbarung der Erfindung

In einer Ausführungsform stellt die vorliegende Erfindung ein Verfahren zum Regeln einer Schiebeunterstützung eines Fahrzeugs bereit, insbesondere eines einspurigen Fahrzeugs wie ein eBike, mit einer Antriebseinheit, die ein Getriebe mit mindestens zwei Gängen umfasst und einer Geschwindigkeitsmesseinrichtung, umfassend die Schritte:

- Bereitstellen der Schiebeunterstützung mit einer ersten Antriebsdrehzahl und/oder einem ersten Drehmoment basierend auf einem ersten vermuteten Gang,
- Bestimmen eines zurückgelegten Winkels einer Welle der Antriebseinheit des Fahrzeugs seit einem letzten Signal der Geschwindigkeitsmesseinrichtung und/oder seit Beginn der Schiebeunterstützung,
- Vermuten eines zweiten Gangs basierend auf dem zurückgelegten Winkel, und
- Bereitstellen der Schiebeunterstützung mit einer zweiten Antriebsdrehzahl und/oder einem zweiten Drehmoment basierend auf dem zweiten vermuteten Gang.

In einer Ausführungsform stellt die vorliegende Erfindung ein Fahrzeug bereit, insbesondere einspuriges Fahrzeug wie ein eBike, mit einer Antriebseinheit, die ein Getriebe mit mindestens zwei Gängen umfasst, einer Geschwindigkeitsmesseinrichtung und einer Schiebeunterstützungseinrichtung, wobei die Schiebeunterstützungseinrichtung Folgendes umfasst:

- Eine erste Bereitstellungseinrichtung, ausgebildet zum Bereitstellen der Schiebeunterstützung mittels der Antriebseinheit mit einer ersten Antriebsdrehzahl und/oder einem ersten Drehmoment basierend auf einem ersten vermuteten Gang,
- Eine Bestimmungseinrichtung, ausgebildet zum Bestimmen eines zurückgelegten Winkels einer Welle der Antriebseinheit des Fahrzeugs seit einem letzten Signal der Geschwindigkeitsmesseinrichtung und/oder seit Beginn der Schiebeunterstützung,
- Eine Vermutungseinrichtung, ausgebildet zum Vermuten eines zweiten Gangs basierend auf dem zurückgelegten Winkel,
- Eine zweite Bereitstellungseinrichtung, ausgebildet zum Bereitstellen der Schiebeunterstützung mittels der Antriebseinheit mit einer zweiten Antriebsdrehzahl und/oder einem zweiten Drehmoment basierend auf dem zweiten vermuteten Gang.

Einer der damit erzielten Vorteile ist, dass die Schiebeunterstützung bereits erhöht werden kann, bevor die Geschwindigkeit des Fahrzeugs eindeutig bestimmt ist. Ein weiterer Vorteil ist, dass die Zeit, in der das Fahrzeug über einer zulässigen Geschwindigkeit für die Schiebeunterstützung betrieben wird, vermieden oder zumindest reduziert wird.

Unter der Formulierung "Vermuten eines Gangs" ist insbesondere zu verstehen, dass ein Gang eines Getriebes des Fahrzeugs geschätzt wird. Beispielsweise wird ein in der aktuellen Situation plausibler und nicht ausgeschlossener Gang vermutet, insbesondere der größte nicht ausgeschlossene Gang.

Der größte Gang ist definiert als die Getriebestufe des Getriebes, die das höchste Übersetzungsverhältnis aufweist. Analog ist der kleinste Gang die Getriebestufe des Getriebes, die das geringste Übersetzungsverhältnis aufweist.

Eine Schiebeunterstützung ist insbesondere definiert als ein Antrieb des Fahrzeugs durch eine Antriebseinheit, wobei die Antriebseinheit eine definierte Antriebsdrehzahl aufweist, die anliegt, während das Fahrzeug von einem Nutzer geschoben wird.

Unter der Formulierung "zurückgelegter Winkel einer Welle der Antriebseinheit" ist insbesondere derjenige Winkel zu verstehen, um den sich eine Welle oder ein Kettenblatt der Antriebseinheit gedreht hat, also ein Anteil einer Umdrehung der Welle oder des Kettenblatts der Antriebseinheit.

Eine vorgebbare Geschwindigkeit ist insbesondere definiert als eine vom Nutzer gewünschte oder maximale Geschwindigkeit des Fahrzeugs.

Wenn ein Nutzer beginnt das Fahrzeug zu schieben, kann über die Geschwindigkeitsmesseinrichtung in der Regel nicht sofort die aktuelle Geschwindigkeit gemessen werden. Da die vorgebbare Geschwindigkeit, bis zu der die Schiebeunterstützung aktiviert werden kann, begrenzt ist, darf die Schiebeunterstützung lediglich eine definierte Antriebsdrehzahl aufweisen. Die zulässige maximale Antriebsdrehzahl der Schiebeunterstützung ist daher abhängig von dem aktuellen Gang des Getriebes des Fahrzeugs. Je größer der aktuelle Gang, desto geringer ist die maximal zulässige Antriebsdrehzahl der Schiebeunterstützung. Um ein Überschreiten der vorgebbaren Geschwindigkeit zu verhindern und da zu Beginn des Schiebevorgangs der aktuelle Gang nicht bekannt ist, wird davon ausgegangen, dass sich das Fahrzeug im höchsten Gang befindet.

Wenn beim Getriebe des Fahrzeuges tatsächlich der höchste Gang eingelegt wäre, müsste bei bekannter Schiebeunterstützungsdrehzahl nach einer definierten Zeit ein neuer Reed-Impuls der Geschwindigkeitsmesseinrichtung messbar sein. Wenn dieser Impuls ausbleibt, das Rad des Fahrzeugs folglich eine geringere Strecke zurückgelegt hat, kann im Getriebe des Fahrzeugs nicht der höchste Gang eingelegt sein. Somit kann die Drehzahl der Schiebeunterstützung erhöht werden, da im Getriebe des Fahrzeugs maximal der zweithöchste Gang eingelegt sein kann. Dieser Vorgang kann beliebig wiederholt werden, solange kein neuer Reed-Impuls gemessen wird, das heißt, es wird kontinuierlich der zurückgelegte Winkel einer Welle der Antriebseinheit gemessen und davon ausgehend Gänge ausgeschlossen. Somit kann die Schiebeunterstützung sukzessiv erhöht werden.

Weitere Merkmale, Vorteile und weitere Ausführungsformen der Erfindung sind im Folgenden beschrieben oder werden dadurch offenbar.

Gemäß einer vorteilhaften Weiterbildung der Erfindung wird die zweite Antriebsdrehzahl und/oder das zweite Drehmoment größer als die erste Antriebsdrehzahl und/oder das erste Drehmoment gewählt, wenn der zweite vermutete Gang kleiner als der erste vermutete Gang und/oder ein zuletzt vermuteter zweiter Gang ist. Wenn der zweite vermutete Gang kleiner als der erste vermutete Gang und/oder eines zuletzt vermuteten zweiten Gangs ist, stellt die Schiebeunterstützung noch nicht die maximal zulässige Unterstützung bereit. Somit kann die Antriebsdrehzahl und/oder das Drehmoment der Schiebeunterstützung erhöht werden. Vorteil hiervon ist, dass die Schiebeunterstützung lediglich erhöht wird, wenn der zweite vermutete Gang niedriger als der erste vermutete Gang ist, also die Schiebeunterstützung tatsächlich zu wenig Unterstützung bereitstellt.

Gemäß einer vorteilhaften Weiterbildung der Erfindung wird der erste vermutete Gang als der höchste Gang des Fahrzeugs festgelegt. Hierdurch kann sichergestellt werden, dass das Fahrzeug zu Beginn des Schiebevorgangs nicht über die vorgebbare Geschwindigkeit hinaus beschleunigt wird.

Gemäß einer vorteilhaften Weiterbildung der Erfindung werden das Bestimmen des zurückgelegten Winkels, das Vermuten des zweiten Gangs und das Bereitstellen der Schiebeunterstützung mit der zweiten Antriebsdrehzahl und/oder dem zweiten Drehmoment mehrfach wiederholt. Auf diese Weise kann nicht lediglich ein Gang, sondern sukzessiv mehrere beziehungsweise weitere Gänge ausgeschlossen werden, sodass die Schiebeunterstützung entsprechend frühzeitiger erhöht werden kann. Dabei können die Gänge auch stufenlos - das heißt kontinuierlich - ausgeschlossen werden.

Gemäß einer vorteilhaften Weiterbildung der Erfindung wird der Antrieb für die Schiebeunterstützung bei Erreichen einer Zielgeschwindigkeit des Fahrzeugs solange mit der zweiten Antriebsdrehzahl und/oder dem zweiten Drehmoment betrieben, bis ein Schaltereignis und/oder Gangwechsel auftritt. Bei Erreichen der Zielgeschwindigkeit, beispielsweise der vorgebbaren Geschwindigkeit, wird die Schiebeunterstützung nicht weiter erhöht werden. Folglich kann die Antriebsdrehzahl und/oder das Drehmoment der Antriebseinheit auf dem aktuellen Wert gehalten werden. Sobald ein Fahrer den Gang wechselt, ist die Schiebeunterstützung jedoch nicht mehr in dem "optimalen" Bereich, das heißt, dass die Schiebeunterstützung zu wenig oder zu viel Unterstützung bereitstellt. Folglich kann bei Detektion eines Schaltereignisses die aktuelle Unterstützung verändert werden. Vorteil hiervon ist, dass das Fahrzeug über einen längeren Zeitraum eine geeignete Schiebeunterstützung bereitstellen kann.

Gemäß einer vorteilhaften Weiterbildung der Erfindung basiert bei Auftreten eines Schaltereignisses das Vermuten des zweiten Gangs auf einem zuletzt vermuteten zweiten Gang. Wenn ein Schaltereignis auftritt, also ein Gangwechsel erfolgt, wird durch die Schiebeunterstützung gegebenenfalls nicht mehr das passende Drehmoment bereitgestellt. Insbesondere wenn der Gang verringert wird, wird eine zu geringe Schiebeunterstützung bereitgestellt. Da der zuletzt vermutete Gang bekannt ist, kann dieser als Startgang für das Verfahren genutzt werden. Auf diese Weise kann der aktuelle Gang durch Ausschließen von Gängen schneller vermutet

werden.

Gemäß einer vorteilhaften Weiterbildung der Erfindung wird die zweite Antriebsdrehzahl und/oder das zweite Drehmoment des Antriebs der Schiebeunterstützung verringert, wenn ein Gangwechsel in einen höheren Gang erfolgt. Wenn das Fahrzeug also in einen höheren Gang geschaltet wird, ist die Schiebeunterstützung möglicherweise zu groß, sodass das Fahrzeug über die vorgebbare Geschwindigkeit hinaus beschleunigt werden kann. Folglich kann in diesem Fall die Schiebeunterstützung verringert werden. Vorteil hiervon ist, dass das Fahrzeug für eine kürzere Zeit eine überhöhte Geschwindigkeit aufweist.

Gemäß einer vorteilhaften Weiterbildung der Erfindung wird die Geschwindigkeitsmesseinrichtung mit einem Reed-Sensor versehen. Durch einen Reed-Sensor kann auf einfache Weise eine Geschwindigkeitsmesseinrichtung bereitgestellt werden.

Weitere wichtige Merkmale und Vorteile der Erfindung ergeben sich aus den Unteransprüchen, aus den Zeichnungen und aus der dazugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungen und Ausführungsformen der vorliegenden Erfindung sind in den Zeichnungen dargestellt und werden in der nachfolgenden Beschreibung näher erläutert.

Dabei zeigt

Figur 1    Schritte eines Verfahrens gemäß einer Ausführungsform der vorliegenden Erfindung,

Figur 2    ein Diagramm mit Geschwindigkeitsverläufen eines Fahrzeugs gemäß einer Ausführungsform der vorliegenden Erfindung,

Figur 3    ein Diagramm mit einem Verlauf eines vermuteten Gangs gemäß einer Ausführungsform der vorliegenden Erfindung, und

Figur 4    ein Fahrzeug gemäß einer Ausführungsform der vorliegenden Erfindung

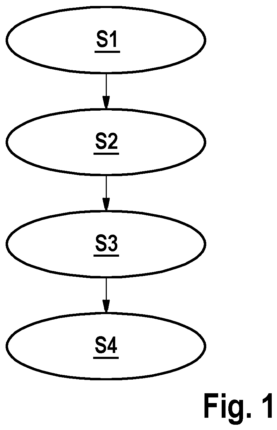

Figur 1 zeigt Schritte eines Verfahrens gemäß einer Ausführungsform der vorliegenden Erfindung.

In einem ersten Schritt S1 wird eine Schiebeunterstützung mit einer ersten Antriebsdrehzahl und/oder mit einem ersten Drehmoment bereitgestellt basierend auf einem ersten vermuteten Gang. Der erste vorgegebene oder vermutete Gang kann dem höchsten Gang eines Fahrzeugs (nicht gezeigt) entsprechen. Durch das Getriebe wird eine Antriebsdrehzahl einer Schiebeunterstützung des Fahrzeugs um einen Faktor verstärkt, wobei der Faktor von dem Gang des Getriebes abhängig ist. Die Geschwindigkeit des Fahrzeugs ist folglich abhängig von dem aktuellen Gang und der Antriebsdrehzahl der Schiebeunterstützung. Der Gang kann jedoch unbekannt sein, sodass die Geschwindigkeit des Fahrzeugs lediglich anhand einer Vermutung des Gangs abgeschätzt werden kann. Indem der erste vermutete Gang als der höchste Gang gewählt wird, wird eine minimale Schiebeunterstützung bereitgestellt, die selbst im Fall, dass sich das Fahrzeug im höchsten Gang befindet, das Fahrzeug nicht über eine vorgebbare Geschwindigkeit hinaus beschleunigt.

In einem zweiten Schritt S2 wird ein Winkel einer Welle der Antriebseinheit des Fahrzeugs seit einem letzten Signal der Geschwindigkeitsmesseinrichtung und/oder seit Beginn der Schiebeunterstützung bestimmt. Der Winkel kann anhand der aktuellen Antriebsdrehzahl der Antriebseinheit und der Zeit seit dem letzten Signal bestimmt werden. Beispielsweise kann der zurückgelegte Winkel anhand folgender Gleichung bestimmt werden.

$$\alpha(t) - \alpha(t_0) = \int_{t_0}^{t} \omega_{mot}(\tau) d\tau$$

Dabei ist:

$\alpha(t)$: *Der aktuelle Winkel*
$\alpha(t_0)$: *Der Startwinkel*
$\omega_{mot}(\tau)$: *Die Winkelgeschwindigkeit des Motors zum Zeitpunkt $\tau$*

Der Winkel kann entweder seit dem Beginn des Schiebevorgangs oder seit dem letzten Reed-Signal bestimmt werden.

In einem dritten Schritt S3 wird ein zweiter Gang basierend auf dem zurückgelegten Winkel vermutet. Der zweite Gang kann der Kehrwert des zurückgelegten Winkels sein. Wenn der aktuelle Gang des Getriebes des Fahrzeugs niedriger als der vermutete Gang ist, wird bei einer Umdrehung der Antriebseinheit ein geringerer Winkel des Hinterrades zurückgelegt als erwartet. Wenn beispielsweise bei einem vermuteten Übersetzungsverhältnis von 4 die Antriebseinheit eine Viertelumdrehung durchführt, müsste das Rad eine vollständige Drehung durchführen. Sollte das Rad jedoch weniger als eine vollständige Drehung durchgeführt haben, muss das Übersetzungsverhältnis weniger als 4 betragen, der Gang muss also geringer sein als vermutet. Hieraus lässt sich zu jedem Zeitpunkt ein maximal möglicher Gang vermuten.

In einem vierten Schritt S4 wird die Schiebeunterstützung mit einer zweiten Antriebsdrehzahl und/oder einem zweiten Drehmoment bereitgestellt basierend auf dem zweiten vermuteten Gang. Wenn zu einem Zeitpunkt in Schritt S3 ein Gang vermutet wird, der geringer ist als der zuletzt vermutete Gang, wird nicht die vorgebbare Schiebeunterstützung bereitgestellt. Folglich kann die Schiebeunterstützung erhöht werden. Die Schritte S2 bis S4 können beliebig wiederholt werden, da zu jedem Zeitpunkt ein neuer maximaler Gang vermutetet werden kann und so sukzessiv die Antriebsdrehzahl oder das Drehmoment der Schiebeunterstützung erhöht werden kann.

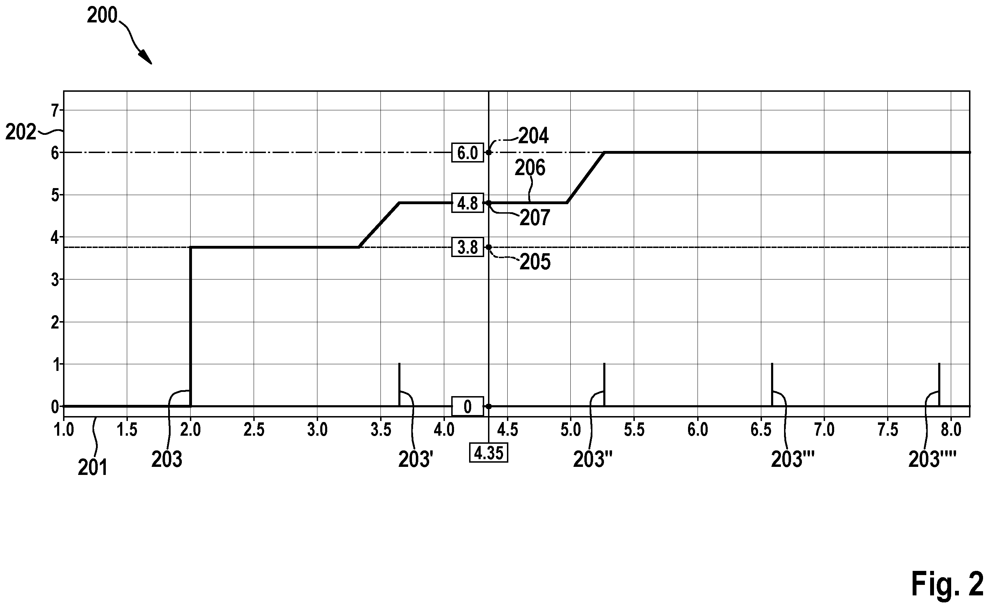

Figur 2 zeigt ein Diagramm mit Geschwindigkeitsverläufen eines Fahrzeugs gemäß einer Ausführungsform der vorliegenden Erfindung.

Das Diagramm 200 zeigt den frühzeitigen Geschwindigkeitsgewinn bei Anwendung des Verfahrens gemäß der Schritte S1 bis S4 gemäß Figur 1. Die X-Achse 201 zeigt die Zeit in Sekunden und die Y-Achse 202 die Geschwindigkeit eines Fahrzeugs (nicht gezeigt) in km/h. An dem Fahrzeug kann eine Geschwindigkeitsmesseinrichtung in Form eines Reed-Sensors angeordnet sein. Jedes Mal, wenn ein Hinterrad des Fahrzeugs eine vollständige Umdrehung durchführt, kann von dem Reed-Sensor ein Signal erzeugt werden. Der Schubvorgang wird zum Zeitpunkt 2,0 gestartet. Somit ist das auch Startpunkt 203 für das Vermuten der Gänge. Die Reed-Signale 203', 203'', 203''', 203'''' können beispielsweise zu den Zeitpunkten 3, 7; 5, 3; 6, 6 und 7, 9 sein.

Die Zielgeschwindigkeit 204 kann 6 km/h betragen. Da jedoch der aktuelle Gang unbekannt ist, wird der höchstmögliche Gang vermutet. Für den Fall, dass der vermutete Gang der höchstmögliche Gang ist, das Fahrrad sich jedoch tatsächlich in einem niedrigeren Gang befindet, wird das Fahrrad mit einer niedrigeren Geschwindigkeit als der vorgebbaren Geschwindigkeit betrieben. Diese Geschwindigkeit ist die minimale Geschwindigkeit 205 von beispielsweise 3,8 km/h. Der Schiebevorgang startet bei t = 2 Sekunden. Die tatsächliche Geschwindigkeit 206 beträgt die minimale Geschwindigkeit 205. Ohne Anwendung einer Ausführungsform eines Verfahrens der vorliegenden Erfindung, würde die Geschwindigkeit erst zum Zeitpunkt des zweiten Reed-Impulses 203'' gemessen werden können, also bei t = 5,3 Sekunden, sodass ab diesem Zeitpunkt die tatsächliche Geschwindigkeit 206 auf die Zielgeschwindigkeit 204 erhöht werden kann. Dabei ist zwar zu diesem Zeitpunkt die tatsächliche Geschwindigkeit 206 bekannt, die Drehzahl kann jedoch nicht sprunghaft erhöht werden, sodass bis zum Erreichen der Zielgeschwindigkeit 204 noch mehr Zeit verstreichen würde.

Durch Ausschließen von Gängen kann jedoch bereits zum Zeitpunkt t=3,3 Sekunden der höchste Gang des Fahrzeugs ausgeschlossen werden. Somit kann bereits zu diesem Zeitpunkt die tatsächliche Geschwindigkeit des Fahrzeugs auf eine Zwischengeschwindigkeit 207 von 4,8 km/h erhöht werden. Zum Zeitpunkt t = 5 Sekunden, kann auch der zweithöchste Gang ausgeschlossen werden, sodass die tatsächliche Geschwindigkeit auf die Zielgeschwindigkeit 204 erhöht werden kann. Im Zeitraum zwischen 3,3 und 5,0 Sekunden ist die tatsächliche Geschwindigkeit folglich höher als im "Normalfall". In Realität ist dieser Zeitraum noch größer, da der zweite Reed-Impuls 203'' durch die Erhöhung der Geschwindigkeit früher als im "Normalfall" auftritt.

Nach dem zweiten Reed-Impuls 203'' kann die Geschwindigkeit regulär bestimmt werden, sodass ein Vermuten des Gangs nicht nötig ist. Es ist jedoch möglich den aktuellen Gang weiterhin zu vermuten und Gänge auszuschließen. Wenn beispielsweise ein Nutzer während des Schiebevorgangs den Gang verringert, verringert sich somit auch die Schiebeunterstützung, da diese noch auf den höheren Gang ausgelegt ist. Bis zur Anpassung der Schiebeunterstützung würde es ohne das erfindungsgemäße Vermuten des Gangs erneut 2 Reed-Impulse benötigen. Durch das dauerhafte Vermuten des Gangs, wie eingangs beschrieben, kann die Geschwindigkeit schneller erhöht werden.

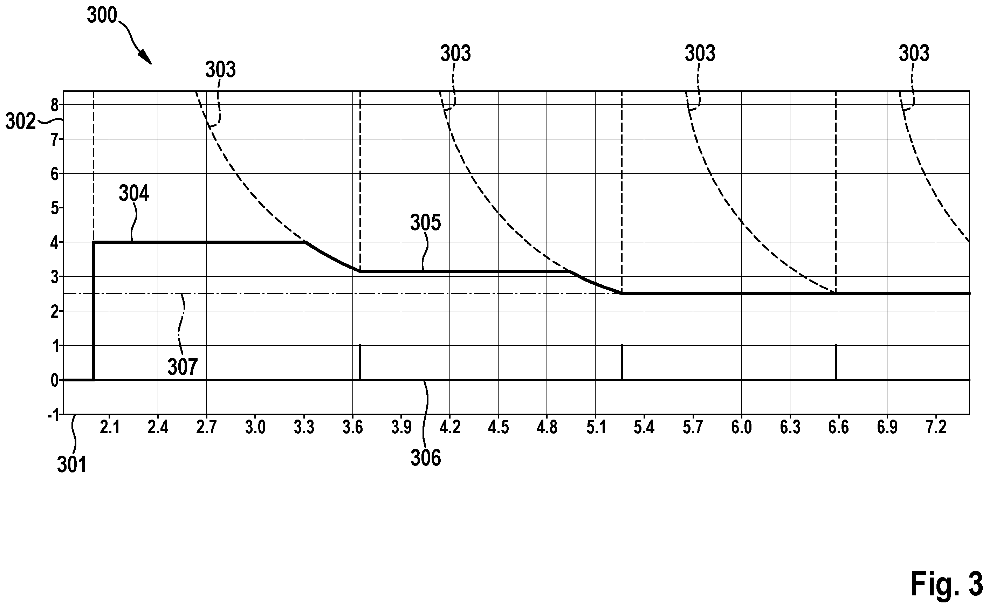

Figur 3 zeigt ein Diagramm mit einem Verlauf eines vermuteten Gangs gemäß einer Ausführungsform der vorliegenden Erfindung.

Das Diagramm 300 zeigt den Verlauf des vermuteten Gangs 303. Die X-Achse 301 zeigt die Zeit in Sekunden und die Y-Achse 302 das dimensionslose Übersetzungsverhältnis. Der Schiebevorgang startet bei t = 2,0 Sekunden. Da ein Reed-Impuls noch nicht gemessen ist, wird der Gang abhängig vom Start des Schiebevorgangs vermutet. Zunächst ist ein zurückgelegter Winkel einer Welle der Antriebseinheit eines Fahrzeugs (nicht gezeigt) noch sehr gering. Folglich ist der maximal mögliche Gang 303 höher als das maximale Übersetzungsverhältnis 304 von 4. Der vermutete Gang 305 ist somit zunächst 4. Der maximal mögliche Gang 303 ist invers abhängig vom zurückgelegten Winkel der Welle der Antriebseinheit und somit invers abhängig von der verstrichenen Zeit seit dem letzten Reed-Impuls. Hierdurch ergibt sich der in Diagramm 300 dargestellte Verlauf einer Hyperbel.

Ab dem Zeitpunkt t = 3,3 Sekunden ist der maximal mögliche Gang 303 kleiner als der vermutete Gang 305, sodass der vermutete Gang 305 sinkt.

Zum Zeitpunkt t = 3,65 Sekunden wird ein erster Reed-Impuls erzeugt. Der maximal mögliche Gang 303 wird jetzt ausgehend vom ersten Reed-Impuls berechnet und ist wieder hoch. Der vermutete Gang 305 bleibt zunächst konstant bis zum Zeitpunkt t = 4,9 Sekunden, wo der maximal mögliche Gang 303 erneut unter den vermuteten Gang 305 sinkt. Somit sinkt auch der vermutete Gang 305 bis auf den tatsächlichen Gang 307.

In Diagramm 300 verändert sich der vermutete Gang 305 kontinuierlich, es ist aber auch möglich, dass der vermutete Gang 305 stufenweise sinkt - beispielsweise bei einem Getriebe mit festen Übersetzungsstufen.

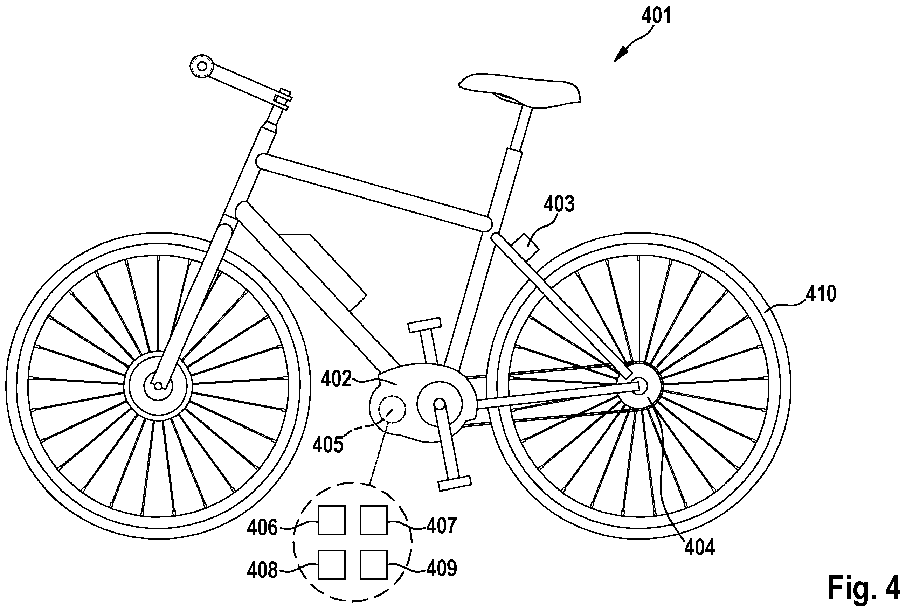

Figur 4 zeigt ein Fahrzeug gemäß einer Ausführungsform der vorliegenden Erfindung.

Das Fahrzeug 401, hier in Form eines eBikes, umfasst eine Antriebseinheit 402 und eine Geschwindigkeitsmesseinrichtung 403, hier in Form eines Reed-Sensors an einem Hinterrad 410. Die Antriebseinheit 402 umfasst ein Getriebe 404 mit mindestens zwei Gängen. Ferner umfasst das Fahrzeug eine Schiebeunterstützungseinrichtung 405. Die Schiebeunterstützungseinrichtung 405 weist auf:

- Eine erste Bereitstellungseinrichtung 406, ausgebildet zum Bereitstellen der Schiebeunterstützung mittels der Antriebseinheit 402 mit einer ersten Antriebsdrehzahl und/oder einem ersten Drehmoment basierend auf einem ersten vermuteten Gang,
- Eine Bestimmungseinrichtung 407, ausgebildet zum Bestimmen eines zurückgelegten Winkels einer Welle der Antriebseinheit 402 des Fahrzeugs 401 seit einem letzten Signal der Geschwindigkeitsmesseinrichtung und/oder seit Beginn der Schiebeunterstützung,
- Eine Vermutungseinrichtung 408, ausgebildet zum Vermuten eines zweiten Gangs basierend auf dem zurückgelegten Winkel,
- Eine zweite Bereitstellungseinrichtung 409, ausgebildet zum Bereitstellen der Schiebeunterstützung mittels der Antriebseinheit 402 mit einer zweiten Antriebsdrehzahl und/oder einem zweiten Drehmoment basierend auf dem zweiten vermuteten Gang.

Dabei kann die erste Bereitstellungeinrichtung 406 und die zweite Bereitstellungeinrichtung 409 dieselbe Bereitstellungseinrichtung sein.

Zusammenfassend weist zumindest eine Ausführungsform der vorliegenden Erfindung zumindest eines der folgenden Merkmale auf und/oder stellt zumindest einen der folgenden Vorteile bereit:

- Schnelleres Erhöhen der Schiebeunterstützung eines Fahrzeugs
- Reduzierung beziehungsweise Verhinderung der Zeit, in der das Fahrzeug über einer zulässigen Geschwindigkeit betrieben wird

Obwohl die vorliegende Erfindung anhand bevorzugter Ausführungsbeispiele beschrieben wurde, ist sie nicht darauf beschränkt, sondern auf vielfältige Weise modifizierbar.

**Patentansprüche**

1. Verfahren zum Regeln einer Schiebeunterstützung eines Fahrzeugs (401), insbesondere eines einspurigen Fahrzeugs (401) wie ein eBike, mit einer Antriebseinheit (402), die ein Getriebe (404) mit mindestens zwei Gängen umfasst und einer Geschwindigkeitsmesseinrichtung (403) umfassend die Schritte:

    - Bereitstellen (S1) der Schiebeunterstützung mit einer ersten Antriebsdrehzahl und/oder einem ersten Drehmoment basierend auf einem ersten vermuteten Gang,
    - Kontinuierliches Bestimmen (S2) eines zurückgelegten Winkels einer Welle der Antriebseinheit (402) des Fahrzeugs (401) seit Beginn der Schiebeunterstützung und/oder seit einem letzten Signal (203", 203‴, 203⁗) der Geschwindigkeitsmesseinrichtung (403) und davon ausgehend ausschließen von Gängen bis zu einem ersten Signal (203') bzw. weiterem Signal (203'', 203''', 203'''') der Geschwindigkeitsmesseinrichtung (403),
    - Vermuten (S3) eines zweiten plausiblen und nicht ausgeschlossenen Gangs basierend auf dem zurückgelegten Winkel, und
    - Bereitstellen (S4) der Schiebeunterstützung mit einer zweiten Antriebsdrehzahl und/oder einem zweiten Drehmoment basierend auf dem zweiten vermuteten Gang.

2. Verfahren gemäß Anspruch 1, wobei die zweite Antriebsdrehzahl und/oder das zweite Drehmoment größer als die erste Antriebsdrehzahl und/oder das erste Drehmoment gewählt wird, wenn der zweite vermutete Gang kleiner als der erste vermutete Gang und/oder ein zuletzt vermuteter zweiter Gang ist.

3. Verfahren gemäß einem der Ansprüche 1-2, wobei der erste vermutete Gang als der höchste Gang (304) des Fahrzeugs (401) festgelegt wird.

4. Verfahren gemäß einem der Ansprüche 1-3, wobei das Bestimmen (S2) des zurückgelegten Winkels, das Vermuten (S3) des zweiten Gangs und das Bereitstellen (S4) der Schiebeunterstützung mit der zweiten Antriebsdrehzahl und/oder dem zweiten Drehmoment mehrfach wiederholt werden.

5. Verfahren gemäß einem der Ansprüche 1-4, wobei die Schiebeunterstützung bei Erreichen einer Zielgeschwindigkeit (204) des Fahrzeugs (401) solange auf der zweiten Antriebsdrehzahl und/oder dem zweiten Drehmoment betrieben wird, bis ein Schaltereignis und/oder Gangwechsel auftritt.

6. Verfahren gemäß einem der Ansprüche 1-5, wobei bei Auftreten eines Schaltereignisses das Vermuten (S3) des zweiten Gangs auf einem zuletzt vermuteten zweiten Gang basiert.

7. Verfahren gemäß einem der Ansprüche 1-6, wobei die zweite Antriebsdrehzahl und/oder das zweite Drehmoment des Antriebs der Schiebeunterstützung verringert wird, wenn ein Gangwechsel in einen höheren Gang erfolgt.

8. Verfahren gemäß einem der Ansprüche 1-7, wobei die Geschwindigkeitsmesseinrichtung (403) mit einem Reed-Sensor versehen wird.

9. Fahrzeug (401), insbesondere einspuriges Fahrzeug wie ein eBike, mit einer Antriebseinheit (402), die ein Getriebe (404) mit mindestens zwei Gängen umfasst, einer Geschwindigkeitsmesseinrichtung (403) und einer Schiebeunterstützungseinrichtung (405), wobei die Schiebeunterstützungseinrichtung (405) Folgendes umfasst:

    - Eine erste Bereitstellungseinrichtung (406), ausgebildet zum Bereitstellen der Schiebeunterstützung mittels der Antriebseinheit 402 mit einer ersten Antriebsdrehzahl und/oder einem ersten Drehmoment basierend auf einem ersten vermuteten Gang,

    - Eine Bestimmungseinrichtung (407), ausgebildet zum kontinuierlichen Bestimmen eines zurückgelegten Winkels einer Welle der Antriebseinheit (402) des Fahrzeugs (401) seit Beginn der Schiebeunterstützung und/oder seit einem letzten Signal der Geschwindigkeitsmesseinrichtung (403) und davon ausgehend ausschließen von Gängen bis zu einem ersten Signal (203') bzw. weiteren Signal (203", 203''', 203'''') der Geschwindigkeitsmesseinrichtung (403),

    - Eine Vermutungseinrichtung (408), ausgebildet zum Vermuten eines zweiten plausiblen und nicht ausgeschlossenen Gangs basierend auf dem zurückgelegten Winkel,

    - Eine zweite Bereitstellungseinrichtung (409), ausgebildet zum Bereitstellen der Schiebeunterstützung mittels der Antriebseinheit (402) mit einer zweiten Antriebsdrehzahl und/oder einem zweiten Drehmoment basierend auf dem zweiten vermuteten Gang.

**Claims**

1. Method for regulating a pushing support of a vehicle (401), in particular a single-track vehicle (401) such as an e-bike, having a drive unit (402) that comprises a transmission (404) having at least two gears and a speed measuring apparatus (403), comprising the steps of:

    - providing (S1) the pushing support with a first drive speed and/or a first torque on the basis of a first presumed gear,

    - continuously determining (S2) an angle covered by a shaft of the drive unit (402) of the vehicle (401) since the start of the pushing support and/or since a last signal (203", 203''', 203'''') of the speed measuring apparatus (403) and, on the basis of this, excluding gears up to a first signal (203') or further signal (203", 203''', 203'''') of the speed measuring apparatus (403),

    - presuming (S3) a second plausible gear, which is not excluded, on the basis of the angle covered, and

    - providing (S4) the pushing support with a second drive speed and/or a second torque on the basis of the second presumed gear.

2. Method according to Claim 1, wherein the second drive speed and/or the second torque is selected to be greater than the first drive speed and/or the first torque if the second presumed gear is lower than the first presumed gear and/or a most recently presumed second gear.

3. Method according to either of Claims 1 and 2, wherein the first presumed gear is defined as the highest gear (304) of the vehicle (401).

4. Method according to one of Claims 1 to 3, wherein the determination (S2) of the angle covered, the presumption (S3) of the second gear and the provision (S4) of the pushing support with the second drive speed and/or the second torque are repeated multiple times.

5. Method according to one of Claims 1 to 4, wherein, when a target speed (204) of the vehicle (401) is reached, the pushing support is operated at the second drive speed and/or the second torque until a switching event and/or a gear change occur/occurs.

6. Method according to one of Claims 1 to 5, wherein, when a switching event occurs, the presumption (S3) of the second gear is based on a most recently presumed second gear.

7. Method according to one of Claims 1 to 6, wherein the second drive speed and/or the second torque of the drive of the pushing support is reduced if there is a gear change to a higher gear.

8. Method according to one of Claims 1 to 7, wherein the speed measuring apparatus (403) is provided with a reed sensor.

9. Vehicle (401), in particular a single-track vehicle such as an e-bike, having a drive unit (402) that comprises a transmission (404) having at least two gears, a speed measuring apparatus (403), and a pushing support apparatus (405), wherein the pushing support apparatus (405) comprises the following:

    - a first provision apparatus (406), designed to provide the pushing support with a first drive speed and/or a first torque on the basis of a first presumed gear by means of the drive unit (402),

    - a determination apparatus (407), designed to continuously determine an angle covered by a shaft of the drive unit (402) of the vehicle (401) since the start of the pushing support and/or since a last signal of the speed measuring apparatus (403) and, on the basis of this, exclude gears up to a first signal (203') or further signal (203", 203''', 203'''') of the speed measuring apparatus (403),
- a presumption apparatus (408), designed to presume a second plausible gear, which is not excluded, on the basis of the angle covered, and
- a second determination apparatus (409), designed to provide the pushing support with a second drive speed and/or a second torque on the basis of the second presumed gear by means of the drive unit (402).

## Revendications

1. Procédé de régulation d'une assistance à la marche d'un véhicule (401), notamment d'un véhicule à voie unique (401) tel qu'un vélo électrique, doté d'une unité d'entraînement (402) qui comprend une transmission (404) ayant au moins deux vitesses et un dispositif de mesure de vitesse (403), comprenant les étapes suivantes :

   - fourniture (S1) de l'assistance à la marche avec une première vitesse de rotation d'entraînement et/ou un premier couple sur la base d'une première vitesse supposée ;
   - détermination continue (S2) d'un angle parcouru d'un arbre de l'unité d'entraînement (402) du véhicule (401) depuis le début de l'assistance à la marche et/ou depuis un dernier signal (203", 203''', 203'''') du dispositif de mesure de vitesse (403) et, sur cette base, exclusion de vitesses jusqu'à un premier signal (203') ou un autre signal (203", 203''', 203'''') provenant du dispositif de mesure de vitesse (403) ;
   - supposition (S3) d'une deuxième vitesse plausible et non exclue sur la base de l'angle parcouru ; et
   - fourniture (S4) de l'assistance à la marche avec une deuxième vitesse de rotation d'entraînement et/ou un deuxième couple sur la base de la deuxième vitesse supposée.

2. Procédé selon la revendication 1, dans lequel la deuxième vitesse de rotation d'entraînement et/ou le deuxième couple sont choisis à une valeur supérieure à la première vitesse de rotation d'entraînement et/ou au premier couple, lorsque la deuxième vitesse supposée est inférieure à la première vitesse supposée et/ou à une deuxième vitesse supposée en dernier lieu.

3. Procédé selon l'une des revendications 1-2, dans lequel la première vitesse supposée est définie comme étant la vitesse la plus élevée (304) du véhicule (401).

4. Procédé selon l'une des revendications 1-3, dans lequel la détermination (S2) de l'angle parcouru, la supposition (S3) de la deuxième vitesse et la fourniture (S4) de l'assistance à la marche avec la deuxième vitesse de rotation d'entraînement et/ou le deuxième couple sont répétées plusieurs fois.

5. Procédé selon l'une des revendications 1-4, dans lequel l'assistance à la marche est mise en œuvre avec la deuxième vitesse de rotation d'entraînement et/ou le deuxième couple lorsqu'une vitesse cible (204) du véhicule (401) est atteinte jusqu'à ce qu'un événement de commutation et/ou un changement de vitesse se produise.

6. Procédé selon l'une des revendications 1-5, dans lequel, lors de l'apparition d'un événement de commutation, la supposition (S3) de la deuxième vitesse est basée sur une deuxième vitesse supposée en dernier lieu.

7. Procédé selon l'une des revendications 1-6, dans lequel la deuxième vitesse de rotation d'entraînement et/ou le deuxième couple de l'entraînement de l'assistance à la marche sont diminués lorsqu'un changement de vitesse à une vitesse supérieure se produit.

8. Procédé selon l'une des revendications 1-7, dans lequel le dispositif de mesure de vitesse (403) est pourvu d'un capteur Reed.

9. Véhicule (401), notamment véhicule à voie unique tel qu'un vélo électrique, doté d'une unité d'entraînement (402) qui comprend une transmission (404) ayant au moins deux vitesses, un dispositif de mesure de vitesse (403) et un dispositif d'assistance à la marche (405), le dispositif d'assistance à la marche (405) comprenant ce qui suit :

   - un premier dispositif de fourniture (406), conçu pour fournir l'assistance à la marche au moyen de l'unité d'entraînement (402) avec une première vitesse de rotation d'entraînement et/ou un premier couple sur la base d'une première vitesse supposée ;
   - un dispositif de détermination (407), conçu pour déterminer en continu un angle parcouru d'un arbre de l'unité d'entraînement (402) du véhicule (401) depuis le début de l'assistance à la marche et/ou depuis un dernier signal du dispositif de mesure de vitesse (403) et, sur cette base, exclure des vitesses jusqu'à un premier signal (203') ou un autre signal (203", 203''', 203'''') provenant du dispositif de mesure de vitesse (403) ;

- un dispositif de supposition (408), conçu pour supposer une deuxième vitesse plausible et non exclue sur la base de l'angle parcouru ;
- un deuxième dispositif de fourniture (409), conçu pour fournir l'assistance à la marche au moyen de l'unité d'entraînement (402) avec une deuxième vitesse de rotation d'entraînement et/ou un deuxième couple sur la base de la deuxième vitesse supposée.

Fig. 1

Fig. 2

EP 4 289 715 B1

Fig. 3

EP 4 289 715 B1

Fig. 4

EP 4 289 715 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3915863 A1
- DE 102019115312 B3